# EUROPÄISCHE PATENTANMELDUNG

(11) **EP 1 145 634 A1**
(43) Veröffentlichungstag der Anmeldung: **17.10.2001**
(21) Anmeldenummer: 00810312.9
(22) Anmeldetag: 10.04.2000
(51) Int. Cl.: A21B 3/13

(54) **Backform und Verfahren zu ihrer Herstellung**

(71) Anmelder: Betschart, Johanna Margareta, 8142 Uitikon (CH)
(72) Erfinder: Betschart, Johanna Margareta, 8142 Uitikon (CH)
(74) Vertreter: Wagner, Wolfgang, Dr. Phil., Dipl.-Phys.

(57) **Zusammenfassung**

Die Oberseite einer Grundform (1) aus Pappmaché ist mit einer durch Aufvulkanisieren einer Folie aus Silikonkautschuk unter Erhitzung derselben auf mindestens 180°C aufgebrachten fest haftenden Gleitschicht (3) versehen, die insbesondere eine Vertiefung (2) zur Aufnahme einer Backmasse vollständig auskleidet, so dass das Gebäck sehr leicht entnehmbar ist. Die Backform ist sehr billig und eignet sich vor allem als Wegwerf-Backform zum einmaligen Gebrauch. Statt aus Pappmaché kann die Grundform (1) auch aus Aluminiumfolie bestehen.

## Beschreibung

### Technisches Gebiet

Die Erfindung betrifft eine Backform gemäss dem Oberbegriff des Anspruchs 1 sowie ein Verfahren zu ihrer Herstellung. Derartige Backformen werden zur Herstellung verschiedener Backwaren, vor allem Kuchen, Torten oder Kleingebäck eingesetzt.

### Stand der Technik

Backformen gemäss dem Oberbegriff des Anspruchs 1 und des Anspruchs 2 sind seit längerem bekannt. An solchen Backformen bleibt jedoch das fertige Gebäck oft haften, so dass es bei der Entnahme beschädigt wird. Es ist auch bekannt, eine Backform mit einer Gleitschicht aus Teflon oder einem anderen Material mit ähnlichen Eigenschaften zu versehen. Solche Materialien sind jedoch kostspielig und nur mit beträchtlichem Aufwand und lediglich auf Grundformen, die bestimmte Anforderungen bezüglich Festigkeit, Hitzebeständigkeit usw. erfüllen, aufzubringen, so dass sich die Backform beträchtlich verteuert. Dies schliesst die Verwendung derartiger Backformen als Wegwerf-Artikel praktisch aus.

### Darstellung der Erfindung

Der Erfindung liegt die Aufgabe zu Grunde, eine gattungsgemässe Backform anzugeben, welcher das fertige Gebäck leicht und ohne Gefährdung entnehmbar ist und welche zugleich sehr kostengünstig herstellbar ist. Diese Aufgabe wird durch die Merkmale im Kennzeichen des Anspruchs 1 oder des Anspruchs 2 gelöst. Ausserdem soll ein einfaches Verfahren zur Herstellung erfindungsgemässer Backformen angegeben werden. Diese Aufgabe wird durch die Merkmale im Anspruch 7 gelöst.

Die erfindungsgemässe Backform weist sehr günstige Gebrauchseigenschaften auf und ist wegen der geringen Kosten der Grundform und der Einfachheit der Herstellung zugleich sehr billig. Sie eignet sich daher sehr gut als Wegwerf-Backform zum einmaligen Gebrauch, so dass auch die nachträgliche Reinigung entfallen kann. Ihre Verwendung ist daher in jeder Beziehung sehr einfach und arbeitsparend.

### Kurze Beschreibung der Zeichnungen

Im folgenden wird die Erfindung anhand von Figuren, welche lediglich Ausführungsbeispiele darstellen, näher erläutert. Es zeigen
- Fig. 1a: eine perspektivische Darstellung einer erfindungsgemässen Backform gemäss einer ersten Ausführungsform,
- Fig. 1b: einen radialen Schnitt durch die Backform gemäss Fig. 1a,
- Fig. 2a: eine teilweise Draufsicht auf eine erfindungsgemässe Backform gemäss einer zweiten Ausführungsform und
- Fig. 2b: einen Schnitt längs B-B in Fig. 2a.

### Wege zur Ausführung der Erfindung

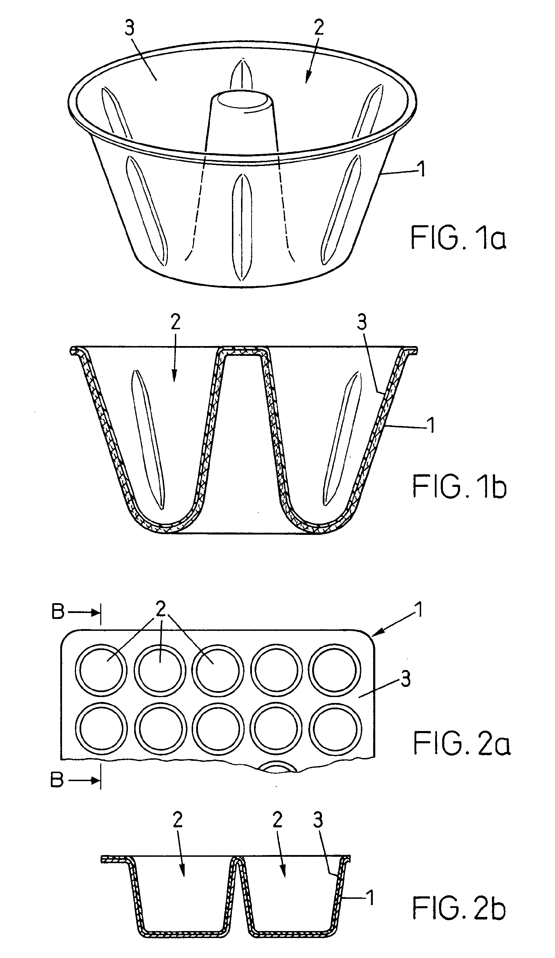

Die in Fig. 1a und 1b dargestellte Backform ist eine Gugelhupfform, welche eine im wesentlichen starre, einstückige Grundform aus Pappmaché umfasst. Diese Masse, aus der z. B. auch Eierkartons hergestellt werden, wird aus einem Papierbrei gegossen oder gepresst, der im wesentlichen aus Altpapier - vor allem aus Zeitungen und Illustrierten - hergestellt sein kann. Das Material ist daher äusserst preisgünstig, aber doch ausreichend fest und hitzebeständig, um den an das Material einer Backform zu stellenden Anforderungen zu genügen. Die Grundform wird gleich in der endgültigen Form hergestellt, so dass keinerlei Nachbearbeitung wie Schneiden oder Falten erforderlich ist. Das Pappmaché kann mit einem Farbstoff versetzt sein.

Die Oberseite der Grundform, welche eine Vertiefung 2 zur Aufnahme des Backgutes bildet, ist vollständig von einer durchgehend an ihr haftenden Gleitschicht 3 bedeckt, welche insbesondere die Vertiefung 2 vollständig auskleidet. Sie besteht aus einem Silikonkautschuk mittlerer Härte, z. B. aus Polydimethylsiloxanen, davon als weichmachende Komponente einige Prozent, z. B. 2,5% cyclische Polydimethylsiloxane. Ausserdem kann ein Farbstoff beigegeben sein. Die Dicke der Gleitschicht 3 liegt vorzugsweise zwischen 0,5 mm und 1 mm.

Bei der Backform nach Fig. 2a, 2b, die sich z. B. für die Herstellung von kleinem Biskuitgebäck oder Muffins eignet, ist die Grundform 1 als dünne rechteckige Platte ausgebildet, welche in einem regelmässigen Raster angeordnete durch Ausbuchtungen nach unten gebildete Vertiefungen 2 trägt. Die Grundform 1 besteht aus Aluminiumfolie und ist wiederum einstückig und ausreichend starr. Hergestellt wird sie z. B. aus einem ebenen Stück Aluminiumfolie, in welchem durch Pressen oder Tiefziehen die Vertiefungen 2 angebracht werden. Wiederum ist die gesamte Oberfläche einschliesslich der Wände der Vertiefungen 2 mit einer überall fest haftenden Gleitschicht 3 bedeckt, welche wie oben im Zusammenhang mit der ersten Ausführungsform beschrieben ausgebildet sein kann.

Die Herstellung der Backformen gemäss den beiden Ausführungsformen aus der jeweiligen Grundform 1 erfolgt so, dass zur Anbringung der Gleitschicht 3 die Oberseite der Grundform 1 mit einer Silkonkautschukfolie bedeckt wird und dann ein formgenau passender heizbarer Metallstempel auf dieselbe abgesenkt wird, der die Silikonkautschukfolie unter Erhitzung derselben auf mindestens 180°C an die Oberseite der Grundform 1 anpresst. Dadurch wird der Silikonkautschuk auf die Grundform 1 aufvulkanisiert und die fest mit deren Oberseite verbundene Gleitschicht 3 gebildet.

Zum Backen wird Backmasse in die Vertiefung 2 bzw. in die Vertiefungen 2 eingefüllt und die Backform in den geheizten Ofen geschoben. Nach Entnahme der Backform und Auskühlen der Backmasse wird das Gebäck z. B. durch Stürzen der Backform entnommen. Dank den ausgezeichneten Gleiteigenschaften der Gleitschicht 3 ist dies auch bei brüchigem Gebäck ohne Schwierigkeiten möglich. Die Backform kann anschliessend zusammengeknüllt und entsorgt werden, doch ist auch mehrmalige Verwendung möglich, zumal die von der Gleitschicht 3 gebildete Oberseite der Backform unabhängig vom Material der Grundform 1 leicht zu reinigen ist.

### Bezugszeichenliste

- 1: Grundform
- 2: Vertiefung
- 3: Gleitschicht

## Patentansprüche

1. Backform mit einer Grundform (1), welche an einer Oberseite mindestens eine Vertiefung (2) zur Aufnahme einer Backmasse bildet, **dadurch gekennzeichnet, dass** die Grundform (1) aus Pappmaché besteht und mindestens die Wand der mindestens einen Vertiefung (2) von einer mit der Grundform (1) fest verbundenen Gleitschicht (3) aus Silikonkautschuk bedeckt ist.

2. Backform mit einer Grundform (1) aus Aluminiumfolie, welche an einer Oberseite mindestens eine Vertiefung (2) zur Aufnahme einer Backmasse bildet, **dadurch gekennzeichnet, dass** mindestens die Wand der mindestens einen Vertiefung (2) von einer mit der Grundform fest verbundenen Gleitschicht (3) aus Silikonkautschuk bedeckt ist.

3. Backform nach Anspruch 1 oder 2, **dadurch gekennzeichnet, dass** es sich beim Silikonkautschuk um einen Silikonkautschuk mittlerer Härte handelt.

4. Backform nach einem der Ansprüche 1 bis 3, **dadurch gekennzeichnet, dass** die Gleitschicht (3) eine Dicke von höchstens 1 mm aufweist.

5. Backform nach einem der Ansprüche 1 bis 4, **dadurch gekennzeichnet, dass** die Gleitschicht (3) eine Dicke von mindestens 0,5 mm aufweist.

6. Backform nach einem der Ansprüche 1 bis 5, **dadurch gekennzeichnet, dass** die gesamte Oberseite der Grundform (1) von der Gleitschicht (3) bedeckt ist.

7. Verfahren zur Herstellung einer Backform gemäss einem der Ansprüche 1 bis 6, **dadurch gekennzeichnet, dass** auf die Oberseite der Grundform (1) eine Folie aus Silikonkautschuk unter Hitzeeinwirkung aufgepresst wird.

8. Verfahren nach Anspruch 7, **dadurch gekennzeichnet, dass** der Silikonkautschuk beim Aufpressen auf mindestens 180°C erwärmt wird.

9. Verfahren nach Anspruch 7 oder 8, **dadurch gekennzeichnet, dass** der Silikonkautschuk beim Aufpressen vulkanisiert wird.
